(19) Europäisches Patentamt
European Patent Office
Office européen des brevets

(11) EP 2 659 956 A1

(12) # EUROPEAN PATENT APPLICATION

published in accordance with Art. 153(4) EPC

(43) Date of publication:
**06.11.2013 Bulletin 2013/45**

(21) Application number: **11853477.5**

(22) Date of filing: **22.12.2011**

(51) Int Cl.:
***B01D 71/56*** *(2006.01)* ***B01D 69/10*** *(2006.01)*
***B01D 69/12*** *(2006.01)* ***B01D 71/48*** *(2006.01)*

(86) International application number:
**PCT/JP2011/079830**

(87) International publication number:
**WO 2012/090862 (05.07.2012 Gazette 2012/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2010 JP 2010292165**

(71) Applicant: **Toray Industries, Inc.**
**Tokyo 103-8666 (JP)**

(72) Inventors:
- **NAKATSUJI, Koji**
**Shiga 520-8558 (JP)**
- **KIMURA, Masahiro**
**Shiga 520-8558 (JP)**
- **SASAKI, Takao**
**Shiga 520-8558 (JP)**
- **TAKAYA, Kiyohiko**
**Shiga, 520-8558 (JP)**
- **SHIMURA, Harutoki**
**Shiga 520-8558 (JP)**

(74) Representative: **Hager, Thomas Johannes**
**Hoefer & Partner**
**Patentanwälte**
**Pilgersheimer Strasse 20**
**81543 München (DE)**

(54) ## COMPOSITE SEMIPERMEABLE MEMBRANE

(57) Provided is a composite semipermeable membrane, comprising: a microporous support membrane which comprises a substrate and a porous support, and a polyamide separation functional layer formed on the microporous support membrane, wherein the polyamide has an irreversible heat absorption, which is measured using temperature modulated DSC, of 275 J/g or more at a temperature in the range of -20 to 150°C in the first heating process.

Provided is a high-performance composite semipermeable membrane having high chemical durability, high water permeation and high rejection.

EP 2 659 956 A1

**Description**

TECHNICAL FIELD

The present invention relates to a composite semipermeable membrane useful for selective separation of a liquid mixture. The composite semipermeable membrane obtained by the present invention can be suitably used in desalination, for example, of sea water or brackish water.

BACKGROUND ART

Regarding separation of a mixture, there are various techniques for removing substances (e.g., salts) dissolved in a solvent (e.g., water), and the use of a membrane separation process as a process for energy saving and resource saving has recently been expanding. Examples of the membrane used in the membrane separation process include a microfiltration membrane, an ultrafiltration membrane, a nanofiltration membrane and a reverse osmosis membrane, which membranes have been used in obtaining drinking water, for example, from sea water, brackish water, and water containing harmful substances and in the production of industrial ultrapure water, wastewater treatment, recovery of valuables and the like.

Most of the reverse osmosis membranes and nanofiltration membranes that are commercially available at present are composite semipermeable membranes, and they fall within two types: those having on a porous support membrane a gel layer and a functional layer in which polymers are cross-linked; and those having on a porous support membrane a functional layer in which monomers are polycondensed.

PRIOR ART DOCUMENTS

PATENT DOCUMENTS

Above all, a composite semipermeable membrane obtained by coating a porous support membrane with a separation functional layer composed of cross-linked polyamide obtained by polycondensation reaction of polyfunctional amines with polyfunctional acyl halides (Patent Documents 1 to 4) has been widely used as a separation membrane having high permeability and selective separation performance.

The method of contacting a composite semipermeable membrane with an aqueous solution having a hydrogen-ion concentration of pH 9 to 13 in order to improve alkali resistance of the composite semipermeable membrane is disclosed (Patent Document 5). Further, the method of contacting a composite semipermeable membrane with cyclic sulfate in order to improve acid resistance of the composite semipermeable membrane is disclosed (Patent Document 6).

Patent Document 1: JP 55-147106 A
Patent Document 2: JP 62-121603 A
Patent Document 3: JP 63-218208 A
Patent Document 4: JP 02-187135 A
Patent Document 5: JP 2006-102624 A
Patent Document 6: JP 2010-234284 A

SUMMARY OF THE INVENTION

PROBLEMS TO BE SOLVED BY THE INVENTION

However, if the composite semipermeable membrane described in Patent Documents 1 to 4 has been used continuously, dirt adheres to the membrane surface with time, reducing water-producing capacity of the membrane. Therefore, chemical cleaning with alkali, acid, or the like will become necessary after operation for a certain period of time. Accordingly, for a continuous stable operation over a long period of time, there has been a need for development of a composite semipermeable membrane that undergoes little membrane performance change from before to after chemical cleaning with alkali, acid, or the like.

Further, the composite semipermeable membranes described in Patent Document 5 or Patent Document 6 also could not provide a high-performance composite semipermeable membrane that had both high water permeation and high rejection performance of the composite semipermeable membrane.

An object of the present invention is to provide a high-performance composite semipermeable membrane that has high chemical durability, high water permeation and high rejection and undergoes little membrane performance change from before to after chemical cleaning.

MEANS FOR SOLVING THE PROBLEMS

To solve the problems described above, the composite semipermeable membrane of the present invention has a constitution below:

A composite semipermeable membrane, comprising:

a microporous support membrane which comprises a substrate and a porous support; and
a polyamide separation functional layer formed on the microporous support membrane,
wherein the polyamide separation functional layer has an irreversible heat absorption,
which is measured using temperature modulated DSC, of 275 J/g or more at a temperature in the range of -20 to 150°C in the first heating process.

Further, in the composite semipermeable membrane of the present invention, it is preferred that the polyamide separation functional layer have carboxyl groups, amino groups, phenolic hydroxy groups and azo groups, and the amino group ratio in functional groups excluding carboxy groups among these functional groups in the polyamide separation functional layer be not more than 0.5.

In the composite semipermeable membrane of the present invention, it is preferred that the substrate be formed from polyester, and the number of carboxylic acid terminal groups of polyester in the substrate be not more than 20 eq/t.

In the composite semipermeable membrane of the present invention, it is preferred that some of the carboxylic acid terminal groups of polyester in the substrate be blocked by a terminal blocking agent.

In the composite semipermeable membrane of the present invention, it is preferred that the terminal blocking agent be at least one compound selected from the group consisting of a carbodiimide compound, an oxazoline compound and an epoxy compound.

EFFECTS OF THE INVENTION

The present invention provides a high-performance composite semipermeable membrane that has high chemical durability, high water permeation and high rejection and undergoes little membrane performance change from before to after chemical cleaning, and by using this membrane, a continuous stable operation over a long period of time can be expected.

BEST MODE FOR CARRYING OUT THE INVENTION

The present invention is a composite semipermeable membrane, comprising:

a microporous support membrane comprising a substrate and a porous support, and a polyamide separation functional layer formed on the microporous support membrane,
wherein the polyamide separation functional layer has an irreversible heat absorption,
which is measured using temperature modulated DSC, of 275 J/g or more at a temperature in the range of -20 to 150°C in the first heating process.

In the present invention, the porous support membrane comprises a substrate and a porous support, substantially does not have separation performance for ions and the like, and is for the purpose of imparting strength to a separating functional layer that substantially has separation performance. Although the size and distribution of pores are not particularly restricted, preferred is, for example, such a microporous support membrane that has uniform micropores or micropores gradually increasing in size from the surface on which the separating functional layer is formed to the other surface, wherein the size of the micropores on the surface on which the separating functional layer is formed is from 1 nm to 100 nm.

Examples of the substrate that constitutes the microporous support membrane in the present invention include a fabric mainly composed of at least one selected from polyester and aromatic polyamide. It is particularly preferable to use polyester having high mechanical and thermal stability.

When the substrate is made of polyester, the number of terminal carboxylic acid groups of the polyester is preferably not more than 20 eq/t, and more preferably not more than 15 eq/t. If it is more than 20 eq/t, catalytic action of the carboxylic acid terminal groups promotes hydrolysis when the composite semipermeable membrane is brought into contact with alkali, resulting in degradation of membrane performance due to degradation of mechanical properties.

The number of carboxylic acid terminal groups in the substrate can be measured by Maulice's method (M. J. Maulice, F. Huizinga. Anal. Chim. Acta, 22 363 (1960)).

To achieve the number of carboxylic acid terminal groups of not more than 20 eq/t, blocking carboxylic acid terminal groups of polyester using a terminal blocking agent, adding buffer during the time from the completion of transesterification reaction or esterification reaction to the early stage of polycondensation reaction, further carrying out solid phase polymerization and the like can be employed in combination.

The compound used as a terminal blocking agent is preferably at least one addition reaction-type compound selected from a carbodiimide compound, an epoxy compound and an oxazoline compound. The blockage of carboxylic acid terminal groups by a terminal blocking agent can be confirmed by analyzing a polyester substrate peeled off from the composite semipermeable membrane using infrared spectroscopy, NMR, or the like.

The fabric used as the substrate requires such excellent film-forming properties that strike-through of macromolecular polymer solution due to excessive permeation upon casting it, peeling-off of the porous support, or, further, defects such as ununiformity of a membrane and pinholes due to, for example, fluffing of the substrate will not occur. Therefore, for the form of the substrate, a non-woven fabric comprising staple fibers and continuous fibers composed of thermoplastic continuous filaments is preferably used.

As a material for the porous support that constitutes the microporous support membrane in the present invention, polysulfone, cellulose acetate, polyvinyl chloride, or a mixture thereof is preferably used, and it is particularly preferable to use polysulfone having high chemical, mechanical and thermal stability.

Specifically, it is preferable to use polysulfone comprising the repeating unit shown in the chemical formula below because of the easiness of controlling the pore size and the high dimensional stability.

[Chemical Formula 1]

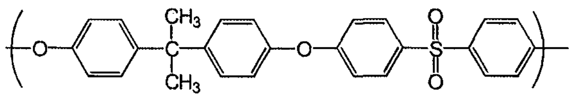

For example, a solution of the above-described polysulfone in N,N-dimethylformamide (hereinafter referred to as DMF) is cast on a densely-woven polyester fabric or a non-woven fabric to a uniform thickness, and the resultant is subjected to wet coagulation in water, whereby a microporous support membrane having micropores with a diameter of a few tens of nm or less at most of the surface can be obtained.

The thickness of the above-described microporous support membrane affects the strength of the composite semipermeable membrane and the packing density in an element using the same. For obtaining sufficient mechanical strength and packing density, the thickness of the microporous support membrane is preferably in the range of 50 to 300 μm, and more preferably in the range of 100 to 250 μm. The thickness of the porous support is preferably in the range of 10 to 200 μm, and more preferably in the range of 30 to 100 μm.

The form of the microporous support membrane can be observed with a scanning electron microscope, a transmission electron microscope, or an atomic force microscope. For example, in the case of observation with a scanning electron microscope, the porous support is peeled off from a substrate, and then this is cut by freeze fracturing method to prepare a sample for cross-sectional observation. The sample is thinly coated with platinum, platinum-palladium, or ruthenium tetrachloride, preferably with ruthenium tetrachloride, and observed with an ultra-high resolution field emission scanning electron microscope (UHR-FE-SEM) at an accelerating voltage of 3 to 6 kV. As an ultra-high resolution field emission scanning electron microscope, for example, S-900 type electron microscope manufactured by Hitachi Ltd. can be used. The membrane thickness and surface pore size of the microporous support membrane are determined from the electron micrographs obtained. The thickness and the pore size in the present invention refer to an average value.

Although the microporous support membrane used in the present invention can be selected from various commercially available materials such as "Millipore filter VSWP" (trade name) available from Millipore and "Ultrafilter UK10" (trade name) available from Toyo Roshi Kaisha, Ltd., it can also be produced according to the method described in "Office of saline Water Research and Development Progress Report", No. 359 (1968).

In the present invention, the polyamide constituting the separating functional layer can be formed by interfacial polycondensation of polyfunctional amines with polyfunctional acyl halides. Here, at least one of the polyfunctional amines and the polyfunctional acyl halides preferably contain a tri- or more polyfunctional amine or polyfunctional acyl halide.

Polyfunctional amine herein refers to an amine having at least two primary amino groups and/or secondary amino groups in one molecule, examples of which include aromatic polyfunctional amines such as phenylenediamine and xylylenediamine, in which two amino groups are attached to a benzene ring in any of ortho, meta and para relationship, 1,3,5-triaminobenzene, 1,2,4-triaminobenzene and 3,5-diaminobenzoic acid; aliphatic amines such as ethylenediamine and propylenediamine; and alicyclic polyfunctional amines such as 1,2-diaminocyclohexane, 1,4-diaminocyclohexane,

piperazine, 1,3-bispiperidyl propane and 4-aminomethylpiperazine. In particular, an aromatic polyfunctional amine having 2 to 4 primary amino groups and/or secondary amino groups in one molecule is preferred in view of selective separation performance, permeability and heat resistance of the membrane, and *m*-phenylenediamine, *p*-phenylenediamine, and 1,3,5-triaminobenzene are suitably used as such a polyfunctional aromatic amine. Among them, it is more preferable to use *m*-phenylenediamine (hereinafter referred to as *m*-PDA) in terms of availability and handleability. These polyfunctional amines may be used alone, or two or more of them may be used simultaneously.

Further, the polyfunctional amine in the present invention may be used in combination with an aromatic amine compound having phenolic hydroxy groups and/or azo groups. Preferred examples of aromatic amine compounds include amidol, 3,3'-dihydroxybenzidine, 3-amino-L-tyrosine, 3-amino-4-hydroxybenzhydrazide, 3-hydroxy-DL-kynurenine, 2,5-diaminohydroquinone, 1,5-diamino-4,8-dihydroxyanthraquinone, 4,6-diaminoresorcinol, Bismarck brown Y, Bismarck brown R, 4,4'-azodianiline, 2,4-diaminoazobenzene, *p*-ethoxychrysoidine, chrysoidine R, Disperse Diazo Black 3BF, Methoxy Red, 4-(5-chloro-2-pyridylazo)-1,3-phenylenediamine, 4-(3,5-dibromo-2-pyridylazo)-1,3-phenylenediamine and salts thereof.

Further, other preferred examples of aromatic amine compounds include 4-amino-2-nitrophenol, picramic acid, 2-aminophenol, 3-aminophenol, 4-aminophenol, 2-amino-4-chlorophenol, 4-sodium aminosalicylate, 2-amino-5-nitrophenol, 2-amino-4-nitrophenol, 1-amino-2-naphthol-4-sulfonic acid, 3-hydroxyanthranilic acid, 2-amino-*p*-cresol, 2-hydroxy-4-methoxyaniline, 3-amino-2-naphthol, 4-aminosalicylic acid, 5-amino-*o*-cresol, 5-aminosalicylic acid, 2-amino-8-naphthol-6-sulfonic acid, 2-amino-5-naphthol-7-sulfonic acid, 2-methyl-4-amino-1-naphthol, 2-amino-4-chloro-5-nitrophenol, 2-amino-4-chlorophenol-6-sulfonic acid, 3-amino-4-hydroxy-5-nitrobenzenesulfonic acid, *p*-phenylazoaniline, 2-aminoazotoluene, 4-aminoazobenzene, Oil Yellow AB, Disperse Orange 3,4-(4'-aminophenylazo)phenylarsonic acid, Mordant Yellow 12, 4-amino-4'-dimethylaminoazobenzene, $\alpha$-naphthyl red, 4-phenylazo-4-naphthylamine, 4-aminobenzene-4'-sodium sulfonate and salts thereof.

Polyfunctional acyl halide refers to an acyl halide having at least two halogenated carbonyl groups in one molecule. Examples of trifunctional acyl halides include trimesic acid chloride, 1,3,5-cyclohexanetricarboxylic acid trichloride and 1,2,4-cyclobutanetricarboxylic acid trichloride, and examples ofbifunctional acyl halides include aromatic bifunctional acyl halides such as biphenyldicarboxylic acid dichloride, azobenzenedicarboxylic acid dichloride, terephthalic acid chloride, isophthalic acid chloride and naphthalene dicarboxylic acid chloride; aliphatic bifunctional acyl halides such as adipoyl chloride and sebacoyl chloride; and alicyclic bifunctional acyl halides such as cyclopentane dicarboxylic acid dichloride, cyclohexanedicarboxylic acid dichloride and tetrahydrofuran dicarboxylic acid dichloride. In view of reactivity with polyfunctional amines, polyfunctional acyl halides are preferably polyfunctional acid chlorides, and preferably polyfunctional aromatic acid chlorides having 2 to 4 carbonyl chloride groups in one molecule in view of the selective separation performance and heat resistance of the membrane. In particular, trimesic acid chloride is still more preferably used from the standpoint of availability and handleability. These polyfunctional acyl halides may be used alone, or two or more of them may be used simultaneously.

According to "Fundamentals of Synthetic Membrane" by Takeshi Matsuura (Kitami Shobo Co.), p. 9, in performance exhibition of a reverse osmosis membrane, a membrane most appropriate for a given application can be designed by selecting, for example, the type, the amount and the position of ionic groups (functional groups). For improving the performance of a cross-linked polyamide membrane, it is also effective to make a phenolic hydroxy group, which is a hydrophilic group, exist in addition to the carboxy group and amino group constituting the main chain. Further, as a means of improving durability of polyamide, it is also effective to make an azo group, which has a high fastness-improving effect, coexist by applying a technique for developing a pigment (dye).

Further, the above-described functional groups can be introduced also by converting amino groups existing in the above-described cross-linked polyamide into phenolic hydroxy groups or azo groups through a chemical reaction appropriately selected. For example, amino groups can be converted into phenolic hydroxy groups by using as a reagent dinitrogen tetroxide, nitrous acid, nitric acid, sodium bisulfite, sodium hypochlorite, or the like, while amino groups can be converted into azo groups by, for example, an azo coupling reaction via diazonium salt formation or a reaction of amino groups with a nitroso compound.

In the composite semipermeable membrane having carboxy groups, amino groups, phenolic hydroxy groups and azo groups in the cross-linked polyamide described above, the content of carboxy groups, amino groups and phenolic hydroxy groups which are hydrophilic functional groups increases water permeation and improves membrane performance, and the content of azo groups increases durability of the membrane. On the other hand, water permeation decreases with increasing content of azo groups. In general, amino groups are readily oxidized with an oxidizing agent such as chlorine or hypochlorous acid. Considering the above, by decreasing the content of amino groups to increase the content ratio of azo groups, and preferably, in addition, by increasing the content of phenolic hydroxy groups, both high membrane performance and high durability can be achieved. The amount of functional group in the separation functional polyamide layer can be analyzed by using, for example, electron spectroscopy for chemical analysis (ESCA). Specifically, it can be determined by using the electron spectroscopy for chemical analysis (ESCA) exemplified in "Journal of Polymer Science", Vol. 26, pp. 559-572 (1988) and "Journal of the Adhesion Society of Japan", Vol. 27, No. 4 (1991).

The concentration of amino groups such as primary amines and secondary amines, the concentration of phenolic hydroxy groups and the concentration of carboxy groups can be determined by gas-phase derivatization using a labeling reagent. As a labeling reagent, pentafluorobenzaldehyde is used for primary amines; trifluoroacetic anhydride is used for phenolic hydroxy groups and amino groups; and trifluoroethanol or dicyclohexylcarbodiimide is used for carboxy groups. The similar measurement method can be used by changing the labeling reagent depending on the type of hydrophilic group.

An example of the method of measuring the concentration of carboxy groups based on the total carbon will now be described. A sample is subjected to gas-phase chemical modification using a labeling reagent, and the reaction rate (r) and reaction residue (m) of the labeling reagent are determined from the ESCA spectrum of the polyacrylic acid standard sample subjected to gas-phase chemical modification at the same time. Next, [F1s], the integrated intensity of F1s peak (peak of 1s orbital of fluorine) resulting from the reaction of the sample with the labeling reagent, is determined. [C1s], the integrated intensity of C1s peak (peak of 1s orbital of carbon), is determined by elemental analysis.

The measurement conditions are shown below.

Apparatus: SSX-100 (manufactured by SSI, US)
Excitation X-ray: aluminum $K\alpha_1$, $K\alpha_2$ radiation (1486.6 eV)
X-ray output: 10 kV, 20 mV
Photoelectron take-off angle: 35°

In data processing, the $C_{1s}$ peak position of neutral carbon (CHx) is set at 284.6 eV.

The integrated intensity [F1s] and [C1s] determined as mentioned above is substituted into the following equation shown in "Journal of Polymer Science", Vol. 26, 559-572 (1988) to determine the concentration of carboxy groups based on the total carbon.

[Mathematical Formula 1]

$$R_{COOH} = \frac{[F1s]}{(3k_{F1s}[C1s] - (2+13m)[F1s])r}$$

Among five functional groups, carboxy group, amino group, phenolic hydroxy group and azo group, in the polyamide separation functional layer, the amino group ratio in functional groups excluding carboxy groups, that is, molar equivalent of amino groups/(molar equivalent of azo groups + molar equivalent of phenolic hydroxy groups + molar equivalent of amino groups) is related to durability of the composite separation membrane, and the amino group ratio is preferably not more than 0.5. Within this preferred range, fastness of the membrane is enhanced, and durability is improved.

The polyamide separation functional layer constituting the composite semipermeable membrane of the present invention is characterized in that the polyamide separation functional layer has an irreversible heat absorption, which is measured using temperature modulated DSC, of 275 J/g or more at a temperature in the range of -20 to 150°C in the first heating process.

Polyamide retains much hydrated water because it is a hydrophilic polymer, and heat absorption in this temperature range is due to elimination of hydrated water. The amount of hydrated water in the polyamide separation functional layer is related to the higher order structure of polyamide, and polyamide retaining more hydrated water forms a structure with larger intermolecular space. The smaller the intermolecular space of the polyamide separation functional layer, the higher the solute rejection performance of the composite semipermeable membrane, whereas if the intermolecular space is too small, chemical durability decreases. This is because polyamide has ionic functional groups such as an amino group and a carboxy group, and therefore its higher order structure is destabilized by interaction between charged sites induced by contact with chemicals such as acid and alkali. Namely, the polyamide separation functional layer of the composite semipermeable membrane having excellent chemical durability of the present invention forms a structure that retains much hydrated water.

The state of hydration in the polyamide separation functional layer can be analyzed by temperature modulated DSC. Temperature modulated DSC is a thermoanalytical method in which measurements are made by raising the temperature averagely while repeating heating and cooling in a constant cycle and amplitude, by which method the total

heat flow signal observed can be separated into reversible components derived, for example, from glass transition and irreversible components derived, for example, from dehydration. The polyamide separation functional layer obtained by peeling off and removing the substrate physically from the composite semipermeable membrane, and then removing the porous support by extraction with a solvent such as dichloromethane is used as an analysis sample to make measurements, and heat absorption of the irreversible components at a temperature in the range of -20 to 150°C in the first heating process is analyzed. The value of heat absorption is determined as the average value of three measurements. The present inventors have intensively studied to discover that composite semipermeable membranes with a heat absorption of 275 J/g or more have excellent chemical durability, thereby completing the present invention.

The process for producing the composite semipermeable membrane of the present invention will now be described.

The skeleton of the separating functional layer constituting the composite semipermeable membrane of the present invention can be formed by carrying out interfacial polycondensation on the surface of a microporous support membrane using an aqueous solution containing polyfunctional amines and a water-immiscible organic solvent solution containing polyfunctional acyl halides mentioned above.

The composite semipermeable membrane of the present invention is obtained by contacting the aqueous polyfunctional amine solution with the polyfunctional acyl halide solution on the microporous support membrane to form a polyamide separation functional layer, followed by, for example, (1) washing with water below 45°C, (2) washing with water below 75°C, then treating with nitrous acid and the like.

Each production process will now be described in detail.

The concentration of polyfunctional amines in the aqueous polyfunctional amine solution is preferably in the range of 0.1 % by weight to 20% by weight, and more preferably in the range of 0.5% by weight to 15% by weight. Within this range, sufficient water permeability and salt/boron rejection performance can be obtained. The aqueous polyfunctional amine solution may contain, for example, surfactants, organic solvents, alkaline compounds and antioxidants as long as the reaction of polyfunctional amines with polyfunctional acyl halides is not impeded. Surfactants have an effect of improving the wettability on the microporous support layer surface and reducing the interfacial tension between the aqueous amine solution and a non-polar solvent. Organic solvents can serve as a catalyst for an interfacial polycondensation reaction, and, in some cases, the interfacial polycondensation reaction can be carried out efficiently by adding them.

To carry out interfacial polycondensation on the microporous support membrane, the above-mentioned aqueous polyfunctional amine solution is first contacted with the microporous support membrane. The contact is preferably carried out uniformly and continuously on the surface of the microporous support membrane. Specifically, examples of the method include coating the microporous support membrane with the aqueous polyfunctional amine solution and immersing the microporous support membrane in the aqueous polyfunctional amine solution. The contact time between the microporous support membrane and the aqueous polyfunctional amine solution is preferably in the range of 5 sec to 10 min, and more preferably in the range of 10 sec to 3 min.

After the aqueous polyfunctional amine solution has been contacted with the porous support membrane, the solution is sufficiently drained so that droplets would not remain on the membrane. Sufficient draining prevents degradation in rejection performance of the composite semipermeable membrane due to the defects resulting from the part where the droplets remained after composite semipermeable membrane formation. Examples of the method of draining the solution that can be used include, for example, holding vertically the microporous support membrane after being contacted with the aqueous polyfunctional amine solution to subject the excess aqueous solution to gravity flow and blowing airflow such as nitrogen from an air nozzle to compulsorily drain the solution, as described in JP 02-78428 A. After the draining, the membrane surface can also be dried to remove a portion of the water of the aqueous solution.

Next, the microporous support membrane after being contacted with the aqueous polyfunctional amine solution is contacted with a water-immiscible organic solvent solution containing polyfunctional acyl halides to form a cross-linked polyamide separation functional layer by interfacial polycondensation.

The concentration of polyfunctional acyl halides in the water-immiscible organic solvent solution is preferably in the range of 0.0 1 % by weight to 10% by weight, and more preferably in the range of 0.02% by weight to 2.0% by weight. The concentration not less than 0.01% by weight ensures sufficient reaction rate, and the concentration not more than 10% by weight prevents the occurrence of side reactions. Further, it is more preferable to add an acylation catalyst such as DMF to this organic solvent solution because the interfacial polycondensation will be accelerated.

The water-immiscible organic solvent is desirably one which dissolves polyfunctional acyl halides and does not break the microporous support membrane, and may be any solvent as long as it is inactive against polyfunctional amine compounds and polyfunctional acyl halides. Preferred examples include hydrocarbon compounds such as hexane, heptane, octane, nonane and decane.

The method of contacting the microporous support membrane with an organic solvent solution containing polyfunctional acyl halides may be carried out similarly to the method of coating the microporous support membrane with an aqueous polyfunctional amine solution.

In the interfacial polycondensation process of the present invention, it is important to cover the microporous

support membrane sufficiently with a cross-linked polyamide thin membrane and allow the contacted water-immiscible organic solvent solution containing polyfunctional acyl halides to remain on the microporous support membrane. Thus, the time for performing an interfacial polycondensation is preferably 0.1 sec to 3 min, and more preferably 0.1 sec to 1 min. When the time for performing an interfacial polycondensation is 0.1 sec to 3 min, the microporous support membrane can be covered sufficiently with a cross-linked polyamide thin membrane, and the organic solvent solution containing polyfunctional acyl halides can be retained on the microporous support membrane.

After forming a polyamide separation functional layer on the microporous support membrane by interfacial polycondensation, the excess solvent is drained. Examples of the method of draining the solvents that can be used include holding the membrane vertically to remove the excess organic solvent by gravity flow. In this case, the vertical holding time is preferably 1 min to 5 min, and more preferably 1 min to 3 min. When it is too short, formation of the separation functional layer is not complete, and when it is too long, the organic solvent is overdried and defects occur on the polyamide separation functional layer, thereby degrading the membrane performance.

In the present invention, a composite semipermeable membrane having high chemical durability is obtained by any method in which the polyamide separation functional layer obtained by the method mentioned above is (1) contacted with water below 45°C, (2) contacted with water containing acid or alcohol, or (3) contacted with water below 75°C, then contacted with a solution containing a compound that reacts with primary amino groups in the polyamide separation functional layer to form a diazonium salt or a derivative thereof, which is called "nitrous acid treatment".

If the polyamide separation functional layer is heated to 45°C or higher, it undergoes a change in higher order structure with release of hydrated water, and the intermolecular space becomes small with increasing treatment temperature; consequently, the polyamide separation functional layer become unstable to chemicals such as acid and alkali. Thus, in the present invention, the temperature of an aqueous solution to be contacted with the composite semipermeable membrane is preferably below 45°C, and more preferably below 40°C.

When an aqueous solution containing a reagent such as acid or alcohol that swells the polyamide separation functional layer is used, the change in higher order structure can be prevented even if the contact temperature is 45°C or higher.

The acid contacted with the polyamide separation functional layer is not particularly limited as long as it dissolves in water by 0.1% by weight or more and adsorbs to the polyamide separation functional layer not to decrease water permeation. Specific examples thereof include hydrochloric acid, sulfuric acid, nitric acid, phosphoric acid, formic acid, acetic acid, oxalic acid, malonic acid, succinic acid, citric acid, methane sulfonic acid, sulfamic acid and the like. The pH of the aqueous solution containing acid is preferably in the range of 3 or less, and more preferably 2 or less. When it is more than 3, it is difficult to prevent the change in higher order structure of the polyamide separation functional layer caused by heating.

Examples of the alcohol contacted with the polyamide separation functional layer include methanol, ethanol, 1-propanol, 2-propanol, ethylene glycol, propylene glycol, diethylene glycol, polyethylene glycol, glycerin, polyglycerin and the like.

When contacting with an aqueous solution before contacting with a solution containing a compound that reacts with primary amino groups in the polyamide separation functional layer to form a diazonium salt or a derivative thereof, the higher order structure is relaxed by the contact with the solution, and, therefore, a composite semipermeable membrane having high chemical durability can be obtained if the temperature of contacting with the aqueous solution is less than 75°C.

The time for contacting the polyamide separation functional layer with an aqueous solution is 1 min to 10 min, and more preferably 2 min to 8 min. When it is less than 1 min, a sufficient washing effect is not produced, and when it is 10 min or more, production efficiency decreases.

Further, the polyamide separation functional layer thus obtained may be contacted with a solution containing a compound that reacts with primary amino groups in the polyamide separation functional layer to form a diazonium salt or a derivative thereof. In this case, the method of contacting the composite semipermeable membrane with a solution containing a compound that forms a diazonium salt or a derivative thereof is not particularly limited if the separation functional layer surface contacts with the compound.

Examples of the compound that reacts with primary amino groups to form a diazonium salt or a derivative thereof include nitrous acid, salts thereof and nitrosyl compounds, and an aqueous solution thereof is preferred when used in the present invention. Since aqueous solutions of nitrous acid and of nitrosyl compounds readily generate gas and decompose, it is preferable to sequentially generate nitrous acid by the reaction, for example, between nitrite and an acidic solution. In general, nitrite generates nitrous acid ($HNO_2$) upon reaction with hydrogen ions, and the generation proceeds efficiently at 20°C when the pH of an aqueous solution is 7 or lower, preferably 5 or lower, and more preferably 4 or lower. Above all, an aqueous solution of sodium nitrite obtained by the reaction with hydrochloric acid or sulfuric acid in an aqueous solution is particularly preferred in terms of convenience in handling.

The concentration of nitrous acid or nitrite in the above-described compound solution that reacts with primary amino groups to form a diazonium salt or a derivative thereof is preferably in the range of 0.01 to 1% by weight at 20°C.

When the concentration is lower than 0.01%, a sufficient effect is not produced, and when the concentration of nitrous acid or nitrite is higher than 1%, it is difficult to handle the solution.

The temperature of the aqueous nitrous acid solution is preferably 15°C to 45°C. When the temperature is is 15°C or lower, the reaction proceeds slowly, and when it is 45°C or higher, it is difficult to handle the aqueous solution because nitrous acid decomposes quickly. The contact time with the aqueous nitrous acid solution is preferably the time enough for generation of a diazonium salt; the treatment can be carried out in a short time at a high concentration, but it requires a long time at a low concentration. When generating a diazonium salt at a low concentration over a long time, the diazonium salt reacts with water before reaction with a compound reactive with the diazonium salt, and, therefore, a short-time treatment at a high concentration is preferred. For example, in the case of an aqueous nitrous acid solution of 2000 mg/L, 30 sec to 10 min is preferred.

The composite semipermeable membrane of the present invention thus produced is wound, together with a feed spacer such as a plastic net, a permeate spacer such as a tricot, and, if necessary, a film for enhancing pressure resistance, around a cylindrical water-collecting pipe provided with a large number of pores by drilling and suitably used as a spiral composite semipermeable membrane element. Further, the elements can be connected in series or in parallel and housed in a pressure container to provide a composite semipermeable membrane module.

Further, the above-described composite semipermeable membrane, and elements and modules thereof can be combined, for example, with a pump for feeding feed water thereto and with an apparatus for pretreating the feed water to constitute a fluid separation apparatus. By using this separation apparatus, feed water can be separated into permeate water such as drinking water and concentrated water that has not permeated through the membrane to obtain water for the intended purpose.

Considering the fact that the higher the operating pressure of the fluid separation apparatus is, the more the energy required for operation increases although the more salt rejection rate improves, and the durability of the composite semipermeable membrane, the operating pressure during passing the water to be treated through the composite semipermeable membrane is preferably 0.5 MPa to 10 MPa. The temperature of feed water is preferably 5°C to 45°C, because the higher it is, the more the salt rejection rate decreases, but the lower it is, the more the flux decreases as well. When the pH of feed water is high, in the case of feed water of high salt concentration such as sea water, scale, for example, of magnesium can occur, and there is a concern about membrane degradation due to the high pH operation. Thus, the operation in the neutral range is preferred.

Examples of the raw water treated with the composite semipermeable membrane according to the present invention include sea water, brackish water and liquid mixtures containing Total Dissolved Solids (TDS) of 500 mg/L to 100 g/L such as wastewater. In general, TDS refers to total dissolved solid content and is expressed as "mass/volume" or "weight ratio". According to the definition, it can be calculated from the weight of the residue on evaporation at a temperature of 39.5 to 40.5°C of the solution filtered through a 0.45-micron filter, and more conveniently it is converted from practical salinity (S).

The composite semipermeable membrane of the present invention is characterized by having high chemical durability, and for the index of chemical durability, it is proper to employ resistance to each of the aqueous solutions of pH 1 and pH 13 as the index. The reason is as follows: pH 1 is the strongest condition as a pH at acid washing in membrane filtration operation, and pH 13 is the strongest condition as a pH at alkali washing; therefore, if the composite semipermeable membrane exhibits resistance to both of the aqueous solutions of pH 1 and pH 13, it is secured that the membrane will not readily deteriorate even if washed with acid or alkali.

## EXAMPLES

The present invention will now be described in more detail by way of example, but the present invention is not limited to these examples.

Measurements of each property in Examples and Comparative Examples were made as described below.

[The Number of Carboxylic Acid Terminal Groups]

The number of carboxylic acid terminal groups was measured by dissolving a polyester substrate in benzyl alcohol, then adding chloroform to the resultant, and titrating with a 0.1 N potassium hydroxide/benzyl alcohol solution.

[Salt Rejection]

To a composite semipermeable membrane, an aqueous sodium chloride solution adjusted to have a concentration of 2,000 ppm, a temperature of 25°C, and a pH of 7 was supplied at an operating pressure of 1.55 MPa, at which time the salt concentration in permeate water was measured, and the salt rejection was calculated by the following equation.

$$\text{Salt rejection} = 100 \times \{1 - (\text{Salt concentration in permeate water/Salt concentration in feed water})\}$$

[Flux]

To a composite semipermeable membrane, an aqueous sodium chloride solution adjusted to have a concentration of 2,000 ppm, a temperature of 25°C, and a pH of 7 was supplied at an operating pressure of 1.55 MPa, and the flux ($m^3/m^2$/day) was determined from water permeation per square meter of the membrane surface per day (cubic meter).

[Chemical Durability]

An operation in which a composite semipermeable membrane is immersed in an aqueous sodium hydroxide solution of pH 13 and an aqueous sulfuric acid solution of pH 1 each for 1 hour at room temperature was repeated for 20 cycles, and the chemical durability was determined from the change in salt rejection from before to after the operation.
$$\text{SP ratio} = (100 - \text{Salt rejection after immersion})/(100 - \text{Salt rejection before immersion})$$

SP is an abbreviation of Substance Permeation.

[Heat Absorption]

A substrate was peeled off and removed physically from a composite semipermeable membrane, and then a porous support was removed by extraction with dichloromethane to prepare an analysis sample of a polyamide separation functional layer. The analysis sample obtained was analyzed by temperature modulated DSC, and the heat absorption (J/g) of irreversible components at a temperature in the range of -20 to 150°C in the first heating process was determined as the average value of three measurements.

[The Amount of Functional Groups]

The amount of functional groups in a polyamide separation functional layer was quantitatively determined using electron spectroscopy for chemical analysis (ESCA). The concentration of amino groups such as primary amines and secondary amines, the concentration of phenolic hydroxyl groups, and the concentration of carboxy groups were determined by gas-phase derivatization using a labeling reagent. As a labeling reagent, pentafluorobenzaldehyde was used for primary amines, and trifluoroacetic anhydride was used for phenolic hydroxyl groups and amino groups.

(Comparative Example 1)

A polyester resin and 1.0% by weight of N,N-di-2,6-diisopropylphenyl carbodiimide (terminal blocking agent) were spun into filaments, which were collected as a fiber web on a moving net conveyer. The fiber webs collected were pressed with a flat roll to produce a polyester non-woven fabric (air permeability: 0.5 to 1 cc/$cm^2$/sec). On the non-woven fabric obtained, a solution of 15.7% by weight of polysulfone in DMF was cast to a thickness of 200 μm at room temperature (25°C), and the resultant was immediately immersed in pure water and left to stand for 5 min to thereby produce a microporous support membrane.
For the polyester non-woven fabric obtained, the number of carboxylic acid terminal groups was measured, and the number of carboxylic acid terminal groups was 18.
The microporous support membrane thus obtained was immersed in a 3.0% by weight aqueous solution of m-PDA for 2 min, and the support layer was slowly pulled up in the vertical direction. Nitrogen was blown thereto from an air nozzle to remove the excess aqueous solution from the microporous support membrane surface. Thereafter, an n-decane solution containing 0.1% by weight of trimesic acid chloride was applied thereto such that the whole surface was wet, and the support membrane was left to stand for 10 sec. Then, to remove the excess solution from the membrane,

the membrane was held upright for 1 min for draining. Thereafter, the membrane was washed with hot water at 90°C for 2 min to obtain a composite semipermeable membrane.

The composite semipermeable membrane thus obtained was evaluated, and the salt rejection, flux, and heat absorption were as shown in Table 1.

Further, the composite semipermeable membrane was evaluated for chemical durability, and the SP ratio before and after chemical contact was as shown in Table 1.

(Example 1)

A composite semipermeable membrane was produced in the same manner as in Comparative Example 1 except that the washing solution after interfacial polycondensation was 0.05 M sulfuric acid. The composite semipermeable membrane obtained was evaluated, and the salt rejection, flux, heat absorption and chemical durability were as shown in Table 1.

(Comparative Example 2)

A composite semipermeable membrane was produced in the same manner as in Comparative Example 1 except that the temperature of the washing water after interfacial polycondensation was 50°C. The composite semipermeable membrane obtained was evaluated, and the salt rejection, flux, heat absorption and chemical durability were as shown in Table 1.

(Example 2)

A composite semipermeable membrane was produced in the same manner as in Comparative Example 2 except that the washing solution after interfacial polycondensation was 20% by weight of ethanol. The composite semipermeable membrane obtained was evaluated, and the salt rejection, flux, heat absorption and chemical durability were as shown in Table 1.

(Example 3)

A composite semipermeable membrane was produced in the same manner as in Comparative Example 2 except that the temperature of the washing water after interfacial polycondensation was 43°C. The composite semipermeable membrane obtained was evaluated, and the salt rejection, flux, heat absorption and chemical durability were as shown in Table 1.

(Example 4)

A composite semipermeable membrane was produced in the same manner as in Comparative Example 2 except that the temperature of the washing water after interfacial polycondensation was 38°C. The composite semipermeable membrane obtained was evaluated, and the salt rejection, flux, heat absorption and chemical durability were as shown in Table 1.

(Example 5)

A composite semipermeable membrane was produced in the same manner as in Example 4 except that a terminal blocking agent was not used when producing a polyester non-woven fabric. The composite semipermeable membrane obtained was evaluated, and the salt rejection, flux, heat absorption and chemical durability were as shown in Table 1.

For the polyester non-woven fabric used in Example 5, the number of carboxylic acid terminal groups was measured, and the number of carboxylic acid terminal groups was 22.

(Example 6)

A composite semipermeable membrane was produced in the same manner as in Example 4 except that the concentration of a terminal blocking agent in the production of a polyester non-woven fabric was 0.5% by weight. The composite semipermeable membrane obtained was evaluated, and the salt rejection, flux, heat absorption and chemical durability were as shown in Table 1.

For the polyester non-woven fabric used in Example 6, the number of carboxylic acid terminal groups was

measured, and the number of carboxylic acid terminal groups was 20.

(Example 7)

The temperature of the washing water after interfacial polycondensation in Comparative Example 1 was changed to 70°C to produce a composite semipermeable membrane. The composite semipermeable membrane was contacted with 2,500 mg/L of an aqueous sodium nitrite solution (30°C) whose pH was adjusted to be 3 with sulfuric acid for 45 sec. Thereafter, the excess reagent washed off with purified water, and the composite semipermeable membrane was immersed in an aqueous sodium sulfite solution (1,000 mg/L) for 3 min to obtain a composite semipermeable membrane.

(Comparative Example 3)

A composite semipermeable membrane was produced in the same manner as in Example 7 except that the temperature of the washing water after interfacial polycondensation was 80°C. The composite semipermeable membrane obtained was evaluated, and the salt rejection, flux, heat absorption and chemical durability were as shown in Table 1.

[Table 1]

| | Number of Carboxylic Acid Terminal Groups | Washing liquid | Washing temperature (°C) | Aftertreatment | Flux ($m^3/m^2/d$) | Salt Rejection (%) | Heat Absorption (J/g) | SP ratio |
|---|---|---|---|---|---|---|---|---|
| Example 1 | 18 | 0.05M Sulfric acid | 90 | absent | 1.15 | 99.3 | 288 | 1.14 |
| Example 2 | 18 | 20% EtOH | 50 | absent | 1.12 | 99.3 | 287 | 1.18 |
| Example 3 | 18 | Water | 43 | absent | 0.93 | 99.6 | 278 | 1.27 |
| Example 4 | 18 | Water | 38 | absent | 1.01 | 99.5 | 284 | 1.22 |
| Example 5 | 22 | Water | 38 | absent | 1.03 | 99.4 | 283 | 1.38 |
| Example 6 | 20 | Water | 38 | absent | 1.00 | 99.4 | 285 | 1.24 |
| Example 7 | 18 | Water | 70 | present | 1.37 | 99.7 | 285 | 1.3 |
| Comparative Example 1 | 18 | Water | 90 | absent | 0.68 | 99.7 | 238 | 1.73 |
| Comparative Example 2 | 18 | Water | 50 | absent | 0.85 | 99.6 | 272 | 1.48 |
| Comparative Example 3 | 18 | Water | 80 | present | 1.38 | 99.7 | 269 | 1.56 |

As described above, the composite semipermeable membrane obtained by the present invention has high chemical durability, high water permeation and high rejection.

INDUSTRIAL APPLICABILITY

The composite semipermeable membrane of the present invention can be suitably used particularly in desalination of brackish water or sea water.

## Claims

1. A composite semipermeable membrane, comprising:

    a microporous support membrane which comprises a substrate and a porous support; and
    a polyamide separation functional layer formed on the microporous support membrane,
    wherein the polyamide separation functional layer has an irreversible heat absorption,
    which is measured using temperature modulated DSC, of 275 J/g or more at a temperature in the range of -20 to 150°C in the first heating process.

2. The composite semipermeable membrane according to claim 1, wherein the polyamide separation functional layer has carboxy groups, amino groups, phenolic hydroxy groups and azo groups, and the amino group ratio in functional groups excluding carboxy groups among these functional groups in the polyamide separation functional layer is not more than 0.5.

3. The composite semipermeable membrane according to claim 1 or 2, wherein the substrate is formed from polyester, and the number of carboxylic acid terminal groups of polyester in the substrate is not more than 20 eq/t.

4. The composite semipermeable membrane according to claim 3, wherein some of the carboxylic acid terminal groups of polyester in the substrate is blocked by a terminal blocking agent.

5. The composite semipermeable membrane according to claim 4, wherein the terminal blocking agent is at least one compound selected from the group consisting of a carbodiimide compound, an oxazoline compound and an epoxy compound.

**INTERNATIONAL SEARCH REPORT**

International application No.
PCT/JP2011/079830

A. CLASSIFICATION OF SUBJECT MATTER
*B01D71/56*(2006.01)i, *B01D69/10*(2006.01)i, *B01D69/12*(2006.01)i, *B01D71/48* (2006.01)i

According to International Patent Classification (IPC) or to both national classification and IPC

B. FIELDS SEARCHED

Minimum documentation searched (classification system followed by classification symbols)
B01D71/56, B01D69/10, B01D69/12, B01D71/48

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2009-34669 A (Toray Industries, Inc.), 19 February 2009 (19.02.2009), claim 1; referential example 1; example 1 (Family: none) | 1,2<br>3-5 |
| X<br>Y | JP 2007-90192 A (Toray Industries, Inc.), 12 April 2007 (12.04.2007), claim 1; example 1 (Family: none) | 1,2<br>3-5 |
| X<br>Y | JP 2009-30024 A (Toray Industries, Inc.), 12 February 2009 (12.02.2009), claims 1, 2; referential examples (Family: none) | 1,2<br>3-5 |

[X] Further documents are listed in the continuation of Box C. [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>28 March, 2012 (28.03.12) | Date of mailing of the international search report<br>10 April, 2012 (10.04.12) |
| Name and mailing address of the ISA/<br>Japanese Patent Office<br>Facsimile No. | Authorized officer<br><br>Telephone No. |

Form PCT/ISA/210 (second sheet) (July 2009)

**INTERNATIONAL SEARCH REPORT**

International application No.
PCT/JP2011/079830

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 2010-99549 A (Toray Industries, Inc.),<br>06 May 2010 (06.05.2010),<br>example 1; comparative example 5<br>(Family: none) | 1,2<br>3-5 |
| X<br>Y | JP 2006-272148 A (Nitto Denko Corp.),<br>12 October 2006 (12.10.2006),<br>claim 1; paragraphs [0059] to [0061]<br>(Family: none) | 1,2<br>3-5 |
| X | JP 2000-350928 A (Toyobo Co., Ltd.),<br>19 December 2000 (19.12.2000),<br>claims 1, 5, 6; example 1<br>(Family: none) | 1,2 |
| X<br>Y | JP 2008-246419 A (Nitto Denko Corp.),<br>16 October 2008 (16.10.2008),<br>claims 1, 2; paragraphs [0043], [0044]; example 7<br>& US 2010/0176052 A1 & WO 2008/120658 A1<br>& CN 101600493 A & KR 10-2009-0127186 A | 1,2<br>3-5 |
| Y | WO 2010/110119 A1 (Toray Industries, Inc.),<br>30 September 2010 (30.09.2010),<br>paragraphs [0012] to [0014]<br>(Family: none) | 3-5 |
| E,X | JP 2011-255306 A (Toray Industries, Inc.),<br>22 December 2011 (22.12.2011),<br>claim 1; paragraph [0022]; example 1;<br>comparative example 4<br>(Family: none) | 1,2 |

Form PCT/ISA/210 (continuation of second sheet) (July 2009)

**INTERNATIONAL SEARCH REPORT**

International application No.
PCT/JP2011/079830

Claim 1 includes all of composite semipermeable membranes, in each of which any layer having a separation function, comprising a polyamide and having a desired property, i.e., an irreversible endothermic heat amount of the layer having a separation function and comprising the polyamide in a temperature range from -20°C to 150°C in the initial temperature-rising stage which is measured by a temperature-modulated DSC method, is formed on a finely porous support membrane composed of a base material and a porous support. However, those composite semipermeable membranes which are disclosed in the meaning within PCT Article 5 are only composite semipermeable membranes which are produced by production processes employing specific temperature conditions and/or using acid-containing washing solutions as mentioned in examples 1-7 in the description. Therefore, this claim is not supported in the meaning within PCT Article 6.

Such being the case, the search was carried out only on composite semipermeable membranes produced by production processes which are included in the above-stated supported scope.

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 55147106 A
- JP 62121603 A
- JP 63218208 A
- JP 2187135 A
- JP 2006102624 A
- JP 2010234284 A
- JP 2078428 A

### Non-patent literature cited in the description

- *Journal of Polymer Science,* 1988, vol. 26, 559-572
- *Journal of the Adhesion Society of Japan,* 1991, vol. 27 (4